# EUROPEAN PATENT APPLICATION

(11) **EP 4 841 724 A1**
(43) Date of publication of application: **18.11.2026**
(21) Application number: 25739095.5
(22) Date of filing: 09.01.2025
(51) Int. Cl.: H01M 10/04, H01M 10/0587, H01M 10/42, G01N 21/89

(54) **WINDING APPARATUS**

(30) Priority: 12.01.2024 KR 20240005692
(71) Applicant: LG Energy Solution, Ltd., Seoul 07335 (KR)
(72) Inventor: KIM, Jaehyun, Daejeon 34122 (KR)
(74) Representative: Goddar, Heinz J.
(86) International application number: PCT/KR2025/000519
(87) International publication number: WO 2025/150930

(57) **Abstract**

A winding apparatus is disclosed. The disclosed invention comprises a push member disposed between an input port and a camera for photographing the input port, which is arranged at one side of a rewinder for winding an electrode and a separator, wherein the push member comprises a protruding plate which is disposed between the camera and the input port, and a photographing passage which opens a part of the push member so that at least a part of the input port can be open toward the camera.

## Description

### [TECHNICAL FIELD]

This application claims the benefit of priority based on Korean Patent Application No. 10-2024-0005692 filed on January 12, 2024, entire content disclosed in the document of the patent applications is included as a portion of this specification.

The present invention relates to a winding apparatus for manufacturing a jelly-roll electrode assembly.

### [BACKGROUND ART]

As technology development and demand for mobile, vehicle, and energy storage devices increase, the demand for batteries as an energy source is rapidly increasing. Among the secondary batteries, lithium secondary batteries with high energy density and discharge voltage have been studied extensively and are now commercialized and widely used.

In particular, lithium secondary batteries have an operating voltage of 3.6V or higher, which is three times higher than nickel-cadmium batteries or nickel-hydrogen batteries, which are widely used as power sources for portable electronic devices, and are rapidly growing in terms of their high energy density per unit weight.

Secondary batteries are also classified according to the structure of the electrode assembly of the structure of anode, cathode and separator interposed therebetween. Representative examples include the jelly-roll electrode assembly in which long sheet-shaped anodes and cathodes are wound with the separator interposed therebetween, the stack-type electrode assembly in which a number of anodes and cathodes cut into units of a predetermined size are sequentially stacked with the separator interposed therebetween, and the stack-folding electrode assembly in which unit cells such as bi-cells or full cells are wound with the anodes and cathodes of predetermined units stacked with the separator interposed therebetween.

Among these, the jelly-roll electrode assembly has the advantages of being easy to manufacture and having a high energy density per weight. In particular, jelly-roll type electrode assemblies with high energy density may be accommodated in cylindrical metal cans to form cylindrical secondary batteries, and such cylindrical batteries are widely used in fields requiring high-capacity secondary batteries such as electric vehicles.

The jelly-roll electrode assembly is generally manufactured by connecting an anode, separator, and cathode to a core, rotating the core, and winding the anode, separator and cathode together along the circumference of the core. For example, the jelly-roll electrode assembly may be manufactured by stacking and winding in the order of cathode-first separator-anode-second separator.

Recently, as cylindrical batteries have become more powerful, the length of electrodes used in jelly-roll electrode assemblies has also increased, and the increased length has made it difficult to accurately measure the electrode length.

In addition, due to the increased length of the electrode during slitting, swells may occur, and such swells may cause meandering of the wound electrode.

When meandering of the electrode occurs during the manufacturing process of the jelly-roll electrode assembly, in severe cases, internal shorts due to contact between the anode and cathode, and lithium precipitation due to positive/negative reversal can occur, which can cause fatal safety problems.

In addition, since process-related problems such as the jelly-roll not properly made during manufacturing or the jelly-roll not being inserted into the cylindrical case due to an enlarged outer diameter may also occur, the process of determining whether meandering occurs during the manufacturing process of the jelly-roll electrode assembly is of great importance.

Generally, meandering is determined by a visual inspection apparatus using a camera. According to this, a camera is installed toward the rewinder that manufactures a jelly-roll electrode assembly by winding the electrode and separator together, and the camera captures the video of the area around the rewinder, and the visual inspection apparatus determines whether meander is present based on the video captured in this manner. Here, the camera of the visual inspection apparatus captures the video of the area of the electrode being transported toward the rewinder, just before the electrode is fed into the rewinder.

Meanwhile, a push member that supports the separator may be installed around the rewinder. When the push member is installed around the rewinder, the separator may be supported such that the push member is able to cut at an appropriate position. However, the push member blocks the space between the camera and the rewinder, causing a problem in that the visual inspection apparatus cannot function properly.

### [DETAILED DESCRIPTION OF THE INVENTION]

### [TECHNICAL PROBLEM]

In order to solve the above-described problems, it is an object of the present invention to provide a winding apparatus with an improved structure capable of providing a passage necessary for obtaining images with a camera.

It is another object of the present invention to provide an improved winding apparatus capable of effectively obtaining images necessary for meander determination of a visual inspection apparatus while maintaining a separator support function.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, a winding apparatus according to the present invention includes a push member disposed between an inlet disposed at an input side of a rewinder winding an electrode and a separator and a camera capturing the video of the inlet, and the push member includes a protruding plate disposed between the camera and the inlet, and a capturing passage exposing a portion of the push member such that at least a portion of the inlet is exposed toward the camera.

A winding apparatus according to one aspect of the present invention for manufacturing an electrode assembly by winding an electrode and a separator supplied in a second direction orthogonal to a first direction, may include: an inlet where the electrode together with the separator is inserted into in a manner that the electrode is disposed on a first side of the separator in the first direction; a rewinder for winding the electrode and the separator supplied through the inlet in a first position; and a push member disposed between the inlet and a camera capturing the inlet from a first side of the inlet in the first direction.

In addition, the push member may include a protruding plate disposed between the camera and the inlet, and a capturing passage exposing a portion of the push member such that at least a portion of the inlet is exposed toward the camera.

In addition, the winding apparatus according to the present invention may further include a rotating block changing a position of the rewinder from the first position to a second position, or from the second position to a third position, or from the third position to the first position along a rotational orbit centered on an axis in a third direction orthogonal to the first direction and the second direction.

In addition, it is preferable that the winding apparatus includes a plurality of rewinder and a plurality of push members arranged along the rotational orbit of the rotating block.

In addition, it is preferable that the plurality of rewinders and the plurality of push members are arranged alternately along the rotational orbit of the rotating block.

In addition, it is preferable that the plurality of rewinders are disposed in the first position, the second position and the third position, respectively.

In addition, it is preferable that the plurality of push members are arranged between the third position and the first position, between the first position and the second position, and between the second position and the third position, respectively.

In addition, it is preferable that the protruding plate protrudes in a centrifugal direction from the rotating block.

In addition, it is preferable that the capturing passage is disposed outer than the protruding plate in diametric direction of the rotating block.

In addition, it is preferable that the camera faces the inlet in a direction between the first direction and the second direction.

Also, it is preferable that one side of the protruding plate of the push member disposed between the third position and the first position facing a centrifugal direction is inclined in a direction between the first direction and the second direction.

In addition, it is preferable that one side of the protruding plate of the push member disposed between the third position and the first position facing the centrifugal direction forms an inclined surface that tilts toward the centripetal direction as it moves toward the first position.

In addition, it is preferable that the electrode is arranged inner than the separator on a plane perpendicular to the first direction, and the capturing passage is arranged at a position such that at least a portion of a boundary line between the electrode and the separator is exposed toward the camera.

In addition, it is preferable that the rewinder winds the electrode and the separator together in the first position and moves to the second position with the separator connected thereto.

In addition, it is preferable that the push member is arranged between the first position and the second position such that at least a portion of the protruding plate applies pressure to the separator in the second position in a centrifugal direction.

In addition, it is preferable that the electrode is arranged inner than the separator on a plane perpendicular to the first direction, and the capturing passage is arranged at a position such that at least a portion of a boundary line between the electrode and the separator is exposed toward the camera.

In addition, it is preferable that the capturing passage is arranged at a position such that a portion of a boundary line between the electrode and the separator along a third direction perpendicular to the second direction is exposed toward the camera.

In addition, it is preferable that the capturing passage is arranged at a position such that a boundary line between the electrode and the separator along the second direction and the boundary line between the electrode and the separator along the third direction are exposed toward the camera.

In addition, it is preferable that the camera is arranged to capture an edge of the electrode where the boundary line between the electrode and the separator along the second direction meets the boundary line between the electrode and the separator along the third direction.

In addition, it is preferable that the capturing passage exposed the edge of the electrode toward the camera.

### [ADVANTAGEOUS EFFECTS]

The winding apparatus of the present invention may be advantageous in that a camera smoothly capture a video of a part that is an object of a video necessary for the determination work of the visual inspection apparatus by providing a capturing passage in a push member that supports a separator such that the separator may be cut at an appropriate position.

In addition, the winding apparatus of the present invention may be advantageous in that a video required for the meander determination of the visual inspection apparatus is effectively acquired while maintaining the original function of the push member that supports the separator by providing a capturing passage in a level that may minimize the functional degradation of the push member that supports the separator such that the separator may be cut at an appropriate position, thereby enabling the meander determination of the visual inspection apparatus to be performed more quickly and accurately.

In addition to the advantageous effects described above, specific effects of the present invention will be described further while describing specific details of the present invention.

### [BRIEF DESCRIPTION OF DRAWINGS]

FIG. 1 is a front view illustrating a winding apparatus according to a first embodiment of the present invention.
FIG. 2 is a side cross-sectional view illustrating an internal structure of the winding apparatus shown in FIG. 1.
FIG. 3 is an enlarged view illustrating a portion of the winding apparatus shown in FIG. 2.
FIG. 4 is a plan view illustrating the push member separately from the winding apparatus shown in FIG. 3.
FIG. 5 is a rear view illustrating a back surface of the push member shown in FIG. 4.
FIG. 6 is a side view illustrating a side surface of the push member shown in FIG. 4.
FIG. 7 is a side cross-sectional view illustrating an internal structure of the push member shown in FIG. 6.
FIGS. 8 to 11 illustrate the operating state of the winding apparatus according to the first embodiment of the present invention.
FIG. 12 is a front view illustrating a winding apparatus according to a second embodiment of the present invention.
FIG. 13 is a plan view illustrating the push member separately from the winding apparatus shown in FIG. 12.
FIG. 14 is a side cross-sectional view of the push member shown in FIG. 13.
FIG. 15 is a front view illustrating a winding apparatus according to a third embodiment of the present invention.
FIG. 16 is a plan view illustrating the push member separately from the winding apparatus shown in FIG. 15.

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

### [OVERALL STRUCTURE OF THE WINDING APPARATUS]

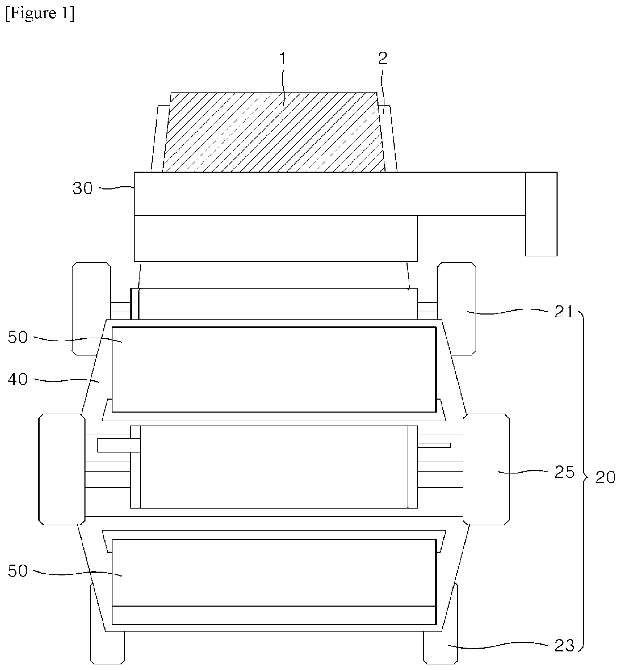

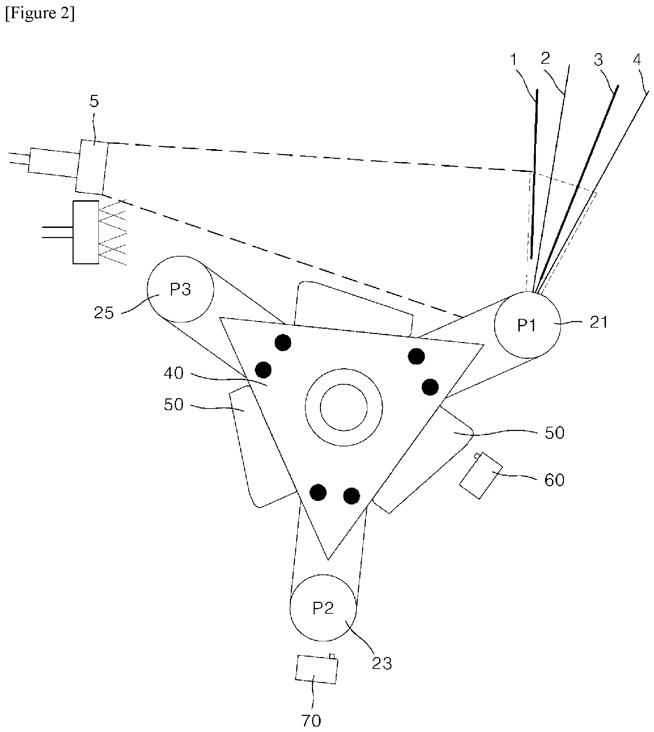

FIG. 1 is a front view illustrating a winding apparatus according to a first embodiment of the present invention, and FIG. 2 is a side cross-sectional view illustrating an internal structure of the winding apparatus shown in FIG. 1.

Referring to FIGS. 1 and 2, a winding apparatus according to a first embodiment of the present invention enables manufacturing of an electrode assembly by winding a first electrode 1, a first separator 2, a second electrode 3 and a second separator 4.

The first electrode 1 may be supplied from a first electrode supply unit, and the second electrode 3 may be supplied from a second electrode supply unit. In addition, the first separator 2 may be supplied from a first separator supply unit, and the second separator 4 may be supplied from a second separator supply unit.

For example, each of the first electrode supply unit and the second electrode supply unit includes a winder with the first electrode 1 wound thereon or a winder with the second electrode 3 wound thereon, and the first electrode 1 and the second electrode 3 may be supplied to the winding apparatus by unwinding the first electrode 1 and the second electrode 3 according to the rotation of the winder.

In addition, each of the first separator supply unit and the second separator supply unit includes a winder with the first separator 2 wound thereon or a winder with the second separator 4 wound thereon, and the first separator 2 and the second separator 4 may be supplied to the winding apparatus by unwinding the first separator 2 and the second separator 4 according to the rotation of the winder.

The winding apparatus according to the first embodiment may include an inlet 10.

The electrodes 1 and 3 may be introduced into the inlet 10 together with the separators 2 and 4. When the electrodes 1 and 3 are introduced into the inlet 10, the electrodes 1 and 3 may be arranged at the first side of the separators 2 and 4 in the first direction. For example, the second electrode 3 may be disposed at the first side of the second separator 4 in the first direction, and the first electrode 1 may be disposed at the first side of the first separator 2 in the first direction. Here, the first electrode 1 may be disposed at the first side of the first separator 2, the second electrode 3 and the second separator 4 in the first direction.

According to the embodiment, forward/backward direction is referred to as the first direction. Here, "at the first side in the first direction" refers to "in front of", and "on the second side in the first direction" to "behind".

In addition, "downward direction" may be defined as the direction of gravity, and "upward direction" may be defined as the direction opposite to the direction of gravity.

According to the embodiment, upward/downward direction is referred to as the second direction. Then, "at the first side in the second direction" refers to "above," and "on the second side in the second direction" refers to "under".

In addition, the horizontal direction orthogonal to the forward/backward direction of the winding apparatus may be referred to as "left/right direction." For convenience, the left/right direction may be referred to as "third direction." Then, "at the first side in the third direction" is "on the right side", and "on the second side in the third direction" is "on the left side".

Furthermore, the widthwise direction of the winding apparatus may be referred to as "lateral direction." Then, "at the first side in the lateral direction" is "on the right side," and "on the second side in the lateral direction" is "on the left side." The third direction is orthogonal to the first direction and the second direction.

In addition, the upward/downward direction described above may be referred to as "vertical direction." Then, the forward/backward direction and the left/right direction, i.e., the first direction and the third direction, may be collectively referred to as "horizontal direction."

According to the first embodiment, the inlet 10 is defined as an area adjacent to the rewinder 20 in the first position P1, and is an area disposed on the input side of the rewinder 20 in the first position P1.

The inlet 10 is an area disposed on the second side of the rewinder 20 in the second direction arranged in the first position P1, and may be an area surrounded by a guide member 30 disposed at the first side of the first electrode 1 in the first direction and the rewinder 20 disposed in the first position P1.

The inlet 10 and the surroundings thereof may be monitored by a visual inspection apparatus. The visual inspection apparatus may be provided to determine whether meander is present in the electrodes 1 and 3 and separators 2 and 4 supplied to the winding apparatus through the inlet 10.

The visual inspection apparatus may include a camera 5 for capturing the video of the inlet 10. The visual inspection apparatus may analyze the video captured by the camera 5 to determine whether meander is present in the inlet 10.

According to the first embodiment, at the inlet 10, the first electrode 1 is disposed at the first side in the first direction of the first separator 2, the second electrode 3, and the second separator 4. That is, the first electrode 1 supplied to the winding apparatus through the inlet 10 may be disposed at the foremost position among the electrodes 1 and 3 and the separators 2 and 4. The first separator 2 may be disposed therebehind.

The length of the first electrode 1 in the first direction is shorter than that of the first separator 2. When the first electrode 1 and the first separator 2 are aligned in the correct position and inserted into the inlet 10, the first electrode 1 may be disposed inner the first separator 2 in the third direction.

Also, unlike the first separator 2 being supplied continuously by winding, the first electrode 1 may be cut in the second direction to a predetermined length and then supplied.

Accordingly, at the inlet 10, the first electrode 1 is exposed toward the first side in the first direction, and the area of the first separator 2 that is not covered by the first electrode 1 may be exposed toward the first side in the first direction.

The camera 5 is arranged to be able to capture the video of the first electrode 1 and the first separator 2 exposed toward the first side in the first direction at the inlet 10. That is, the camera 5 is arranged at the first side in the first direction of the inlet 10 to capture the video of the inlet 10.

The camera 5 may capture a portion of the boundary line between the first electrode 1 and the first separator 2 along the third direction, and a portion of the boundary line between the first electrode 1 and the first separator 2 along the second direction. In addition, the camera 5 may capture the boundary line between the first electrode 1 and the first separator 2 along the third direction and the boundary line between the first electrode 1 and the first separator 2 along the second direction together, and may capture the edge of the first electrode 1 where the boundary line between the first electrode 1 and the first separator 2 along the third direction and the boundary line between the first electrode 1 and the first separator 2 along the second direction meet.

In addition, the winding apparatus according to the first embodiment may include a rewinder 20. The rewinder 20 is provided to wind together the electrodes 1 and 3 and the separators 2 and 4 supplied through the inlet 10. The rewinder 20 rotates around an axis in a third direction, and may manufacture an electrode assembly by winding the electrodes 1 and 3 and the separators 2 and 4 while rotating around the axis in the third direction.

The rewinder 20 may be provided to move to a first position P1, a second position P2 and a third position P3. The rewinder 20 may manufacture an electrode assembly by winding the electrodes 1 and 3 and the separators 2 and 4 supplied through the inlet 10 at the first position P1.

In addition, the winding apparatus according to the first embodiment may include the guide member 30. The guide member 30 may be disposed between the inlet 10 and the camera 5 that captures the video of the inlet 10 at the first side in the first direction of the inlet 10. The guide member 30 may be disposed to guide the transport of the first electrode 1 from the inlet 10 toward the rewinder 20.

In addition, the winding apparatus according to the first embodiment may include a cutter 60, a tape applicator 70 and a push member 50.

The cutter 60 may be disposed between the first position P1 and the second position P2. The cutter 60 cuts the separators 2 and 4 connected to the rewinder 20 that has moved to the second position P2 after completing the winding of the electrode assembly at the first position P1.

The tape applicator 70 is disposed adjacent to the second position P2. The tape applicator 70 attaches a tape to the outer circumferential surface of the electrode assembly at the second position P2 to prevent the separators 2 and 4 from unwinding and to allow the electrode assembly to be finished.

A push member 50 positioned between the first position P1 and the second position P2 together with the cutter 60 may play a role in supporting the separators 2 and 4 such that the separators 2 and 4 may be cut at an appropriate position.

### [STRUCTURE OF PUSH MEMBER]

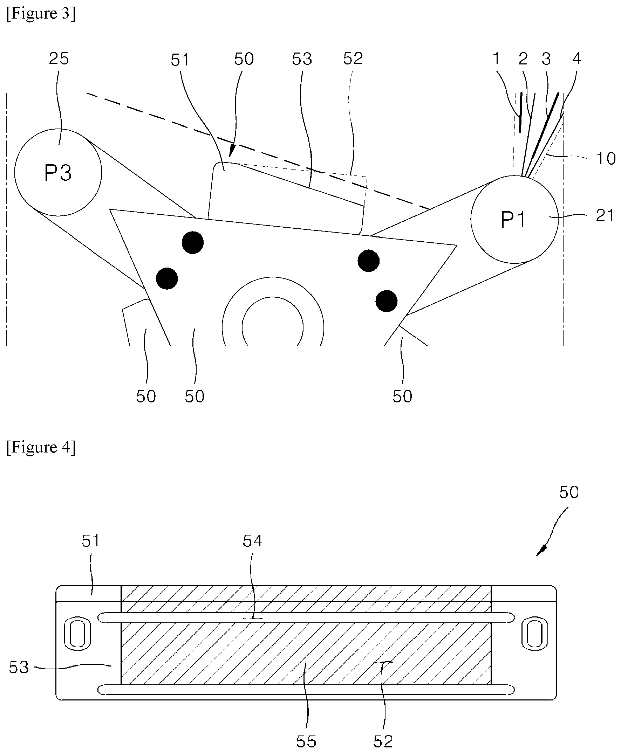

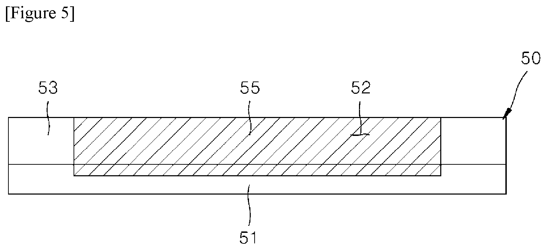

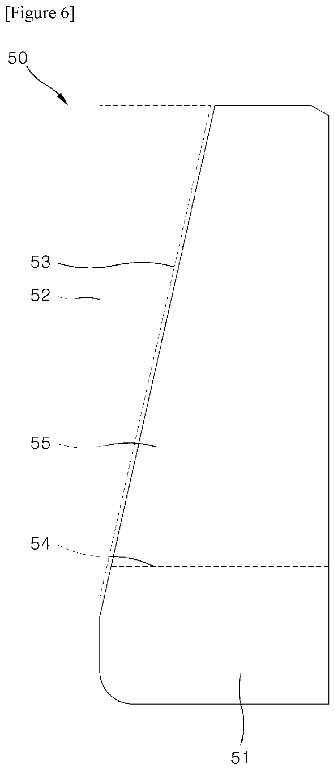

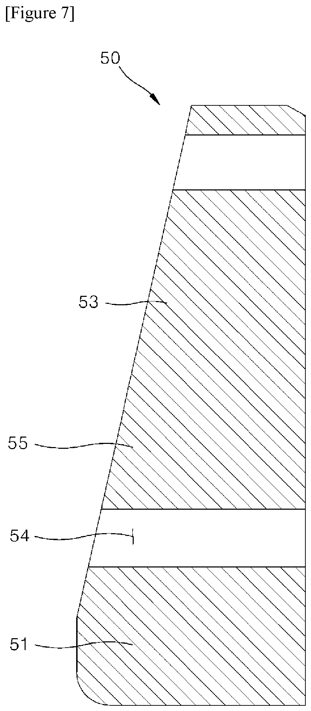

FIG. 3 is an enlarged view illustrating a portion of the winding apparatus shown in FIG. 2. FIG. 4 is a plan view illustrating the push member separately from the winding apparatus shown in FIG. 3, FIG. 5 is a rear view illustrating a back surface of the push member shown in FIG. 4, FIG. 6 is a side view illustrating a side surface of the push member shown in FIG. 4, and FIG. 7 is a side cross-sectional view illustrating an internal structure of the push member shown in FIG. 6.

Referring to FIGS. 2 and 3, the winding apparatus may include a plurality of rewinders 20. According to the first embodiment, the winding apparatus including a first rewinder 21, a second rewinder 23 and a third rewinder 25 is exemplified.

The rewinder 20 may be installed on a rotating block 40. The rotating block 40 may be rotatable around the axis in the third direction. The rewinder 20 is disposed on the outer circumferential surface of the rotating block 40 and may be rotated around the third direction by the rotating block 40 rotating around the third direction.

For example, the rotating block 40 may have an approximately triangular prism shape. When viewed in the third direction, the shape of the rotating block 40 may be approximately a triangular shape. The rewinder 20 may be disposed at each vertex of the rotating block 40.

As described above, the rewinder 20 installed on the rotating block 40 may change its position by rotating with the rotating block 40. For example, with the first rewinder 21 in the first position P1, the second rewinder 23 in the second position P2, and the third rewinder 25 in the third position, the position of the first rewinder 21 is repeatedly changed in the order of the second position P2, the third position P3 and the first position P1, the position of the second rewinder 23 is repeatedly changed in the order of the third position P3, the first position P1 and the second position P2, and the position of the third rewinder 25 is repeatedly changed in the order of the first position P1, the second position P2 and the third position P3.

The push member 50 may be installed on the rotating block 40. The push member 50 may be installed on the outer circumferential surface of the rotating block 40, and may protrude in the centrifugal direction from the outer circumferential surface of the rotating block 40.

The push member 50 may be disposed between the rewinders 20 arranged at the vertexes of the rotating block 40, respectively. That is, the push member 50 may be disposed between the first position P1 and the second position P2, between the second position P2 and the third position P3, and between the third position P3 and the first position P1.

In one example, a plurality of rewinders 20 and a plurality of push members 50 arranged along the rotation orbit of the rotating block 40 are installed on the rotating block 40, and the plurality of rewinders 20 and the plurality of push members 50 may be arranged alternately along the rotation orbit of the rotating block 40. For example, one push member 50 may be disposed between the first rewinder 21 and the second rewinder 23, one push member 50 between the second rewinder 23 and the third rewinder 25, and one push member 50 between the third rewinder 25 and the first rewinder 21.

When one of the plurality of push members 50 is disposed between the first position P1 and the second position P2 (hereinafter referred to as the "cutting position"), the push member 50 disposed at the corresponding position is arranged between the separators 2 and 4 connected to the rewinder 20 at the second position P2 and the rotating block 40. The push member 50 disposed at the corresponding position may apply pressure to the separators 2 and 4 in the centrifugal direction.

Meanwhile, when one of the plurality of push members 50 is disposed between the third position P3 and the first position P1 (hereinafter referred to as the "covering position"), the push member 50 disposed at the corresponding position is arranged between the camera 5 and the inlet 10.

Referring to FIGS. 3 to 7, the push member 50 may include a protruding plate 51. The protruding plate 51 constitutes most of the skeleton and appearance of the guide member 30, and applies pressure to the separators 2 and 4 in the centrifugal direction when the push member 50 is in the cutting position.

The protruding plate 51 may protrude from the rotating block 40 in the centrifugal direction. For example, the protruding plate 51 may have a polyhedral shape protruding from the rotating block 40 in the centrifugal direction. Such protruding plate 51 may be disposed between the camera 5 and the inlet 10 when the push member 50 is in the covering position.

The push member 50 may include a capturing passage 52. The capturing passage 52 is provided to expose a portion of the push member 50 in the first direction. The capturing passage 52 may expose a portion of the push member 50 such that at least a portion of the inlet 10 is exposed toward the camera 5.

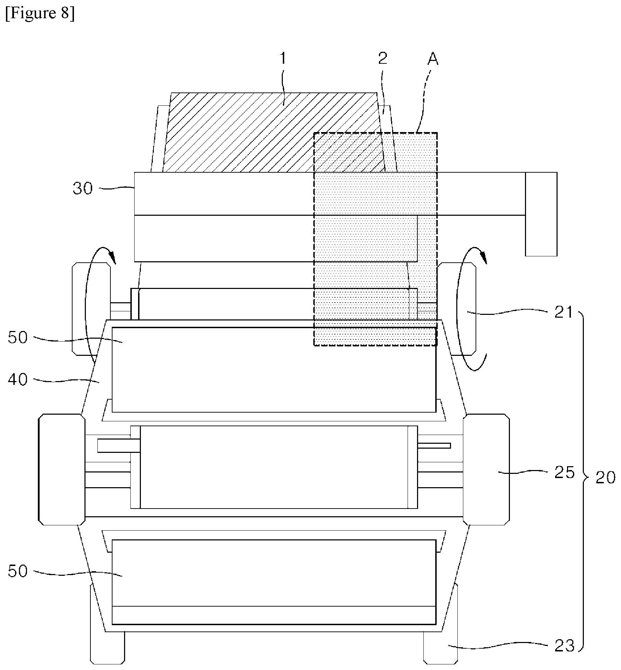

The capturing passage 52 is arranged between the inlet 10 and the camera 5 within the shooting range (A; see FIG. 8) of the camera 5. The capturing passage 52 may be arranged radially outer than the protruding plate 51 of the rotating block 40. For example, when the push member 50 is in the covering position, the capturing passage 52 may be arranged above the protruding plate 51.

According to the first embodiment, the camera 5 may capture the inlet 10 by facing the inlet 10 in a direction between the first direction and the second direction. In response, a slope section 53 may be provided on one surface of the protruding plate 51. The slope section 53 may be provided on a first surface of the protruding plate 51 facing the centrifugal direction, and have a protrusion length from the rotating block 40 changing along the rotation orbit of the rotating block 40.

When the push member 50 is in the covering position, the slope section 53 may be inclined in the direction between the first direction and the second direction. For example, when the push member 50 is in the covering position, that is, between the third position and the first position, the slope section 53 may include a surface inclined downward in the centripetal direction toward the first position P1.

In one example, the capturing passage 52 may be disposed radially outer than the slope section 53. For example, when the overall shape of the push member 50 is approximately a hexahedron, the space excluding the space occupied by the protruding plate 51 may be the capturing passage 52. The slope section 53 may define the boundary between the protruding plate 51 and the capturing passage 52.

When the overall shape of the push member 50 is approximately a hexahedron, the capturing passage 52 may penetrate the protruding plate 51 at the covering position in the direction between the first direction and the second direction.

For example, the capturing passage 52 may have a shape with a portion of the protruding plate 51 cut open. Such capturing passage 52 may form a passage connecting the camera 5 and the inlet 10 within the shooting range A of the camera 5 in the push member 50.

According to the first embodiment, when the electrodes 1 and 3 and the separators 2 and 4 are introduced into the rewinder 20 through the inlet 10, the first electrode 1 is disposed inner than the first separator 2 on the plane perpendicular to the first direction. That is, on the vertical plane formed by the first separator 2, the boundary line between the first electrode 1 and the first separator 2 is disposed inner than the first separator 2.

The capturing passage 52 is disposed at a position where a portion of the boundary line between the first electrode 1 and the first separator 2 is exposed toward the camera 5.

In one example, the capturing passage 52 may be positioned such that a portion of the boundary line between the first electrode 1 and the first separator 2 along the third direction is exposed toward the camera 5.

In another example, the capturing passage 52 may be positioned such that the boundary line between the first electrode 1 and the first separator 2 along the second direction and the boundary line between the first electrode 1 and the first separator 2 along the third direction are exposed together toward the camera 5.

According to the first embodiment, the camera 5 is arranged to capture the video of the edge of the first electrode 1 where the boundary line between the first electrode 1 and the first separator 2 along the second direction meets the boundary line between the first electrode 1 and the first separator 2 along the third direction. That is, the shooting range A of the camera 5 may be set to an area including the edge of the first electrode 1.

In another example, the capturing passage 52 may be positioned such that the edge of the first electrode 1 is exposed toward the camera 5.

Meanwhile, the push member 50 may further include a contacting portion 55. The contacting portion 55 may be positioned on a first surface of the protruding plate 51 facing the centrifugal direction, for example, a portion where a slope section 53 is provided. The contacting portion 55 may be positioned to be in contact with the separators 2 and 4 when the push member 50 is in the cutting position, and may include a material that reduces the friction coefficient between the separators 2 and 4 and the protruding plate 51.

In one example, the contacting portion 55 may be carbide-welded to one surface of the protruding plate 51. In another example, the contacting portion 55 may be attached to or coated on the surface of the protruding plate 51.

The contacting portion 55 has a smooth surface that reduces the coefficient of friction between the separators 2 and 4 and the protruding plate 51 so as to allow the separators 2 and 4 to smoothly slide on the surface of the protruding plate 51 and be fed toward the rewinder 20 in the second position P2.

In addition, an insertion groove 54 may be provided in the push member 50. The insertion groove 54 may form a passage in the protruding plate 51 such that the cutter 60 may be inserted into the push member 50 when cutting the separators 2 and 4. For example, the insertion groove 54 may have a shape that is recessed from one surface of the protruding plate 51 in the centripetal direction.

### [OPERATION AND EFFECT OF THE PUSH MEMBER]

FIGS. 8 to 11 illustrate the operating state of the winding apparatus according to the first embodiment of the present invention.

Hereinafter, the operation and effect of the winding apparatus according to the present embodiment will be described with reference to FIGS. 8 to 11.

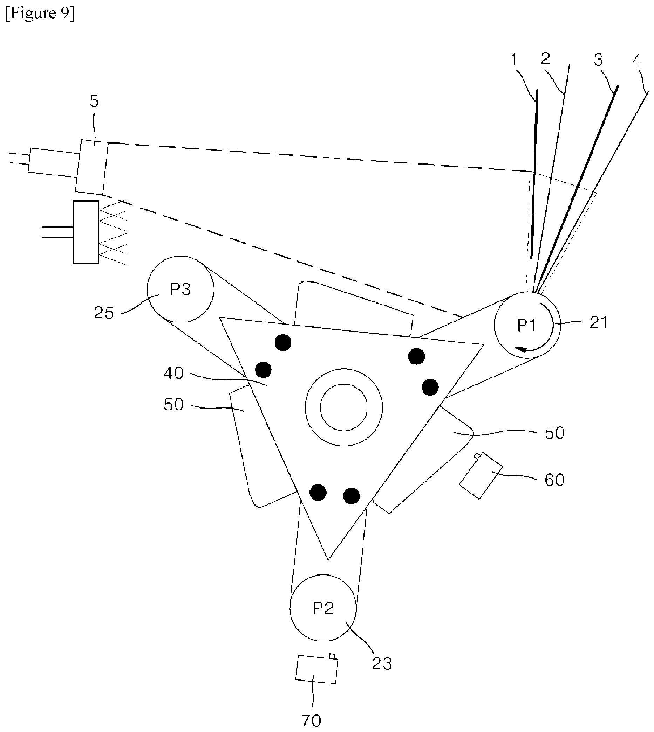

Referring to FIGS. 8 and 9, the first rewinder 21 in the first position P1 may wind the electrodes 1 and 3 and the separators 2 and 4. Here, by applying pressure to the first electrode 1 so as to be in contact with the first separator 2, the push member 50 may guide the transport of the first electrode 1 such that the first electrode 1 is inserted between the first separator 2 and the outer circumferential surface of the electrode assembly being wound in the rewinder 20.

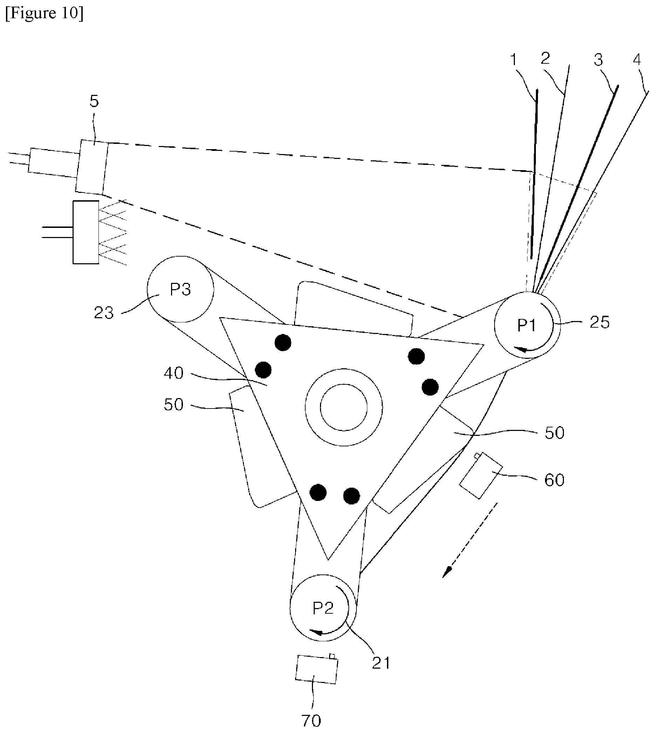

The first rewinder 21 that has completed the winding of the electrodes 1 and 3 and the separators 2 and 4 at the first position P1 is moved to the second position P2, as shown in FIG. 10. Here, the second rewinder 23 is moved to the third position P3, and the third rewinder 25 is moved to the first position P1. The third rewinder 25 in the first position P1 may wind the electrodes 1 and 3 and the separators 2 and 4.

When the first rewinder 21 with the electrode assembly wound thereon is in the second position P2, the supply of the electrodes 1 and 3 to the first rewinder 21 is stopped. However, the separators 2 and 4 are still connected to the first rewinder 21.

The first rewinder 21 in the second position P2 winds the separators 2 and 4 connected to the first rewinder 21 such that the separators 2 and 4 forms the outer circumferential surface of the electrode assembly. When this task is completed, the cutter 60 positioned between the first position P1 and the second position P2 cuts the separators 2 and 4, and then the tape applicator 70 attaches a tape to the outer circumferential surface of the electrode assembly to prevent the separators 2 and 4 from unwinding and to finish the electrode assembly.

The push member 50 in the cutting position together with the cutter 60 may support the separators 2 and 4 such that the separators 2 and 4 may be cut at an appropriate position. Here, the push member 50 may apply pressure to the separators 2 and 4 in the centrifugal direction such that the length of the separators 2 and 4 between the first position P1 and the second position P2 may be increased.

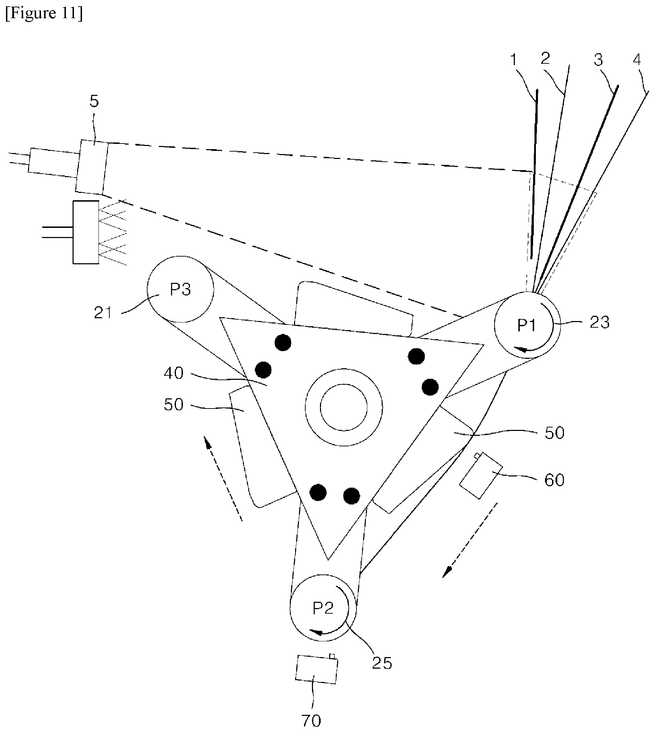

The first rewinder 21 that has completed the production of the electrode assembly at the second position P2 may move to the third position P3 as shown in FIG. 11, and then discharge the completed electrode assembly at the third position P3. Here, the electrode assembly wound by the second rewinder 23 is finished at the second position P2, and the second rewinder 23 may wind the electrodes 1 and 3 and the separators 2 and 4 at the first position P1.

Accordingly, when the separators 2 and 4 is cut by the cutter 60, the length of the separators 2 and 4 connected to the rewinder 20 may increase more than when cut without being pressed by the push member 50. As a result, the insulating layer formed on the surface of the electrode assembly by the separators 2 and 4 wound around the outer circumferential surface of the electrode assembly is formed thicker.

While the electrode assembly is manufactured in the winding apparatus as described above, the inlet 10 and the surroundings thereof may be monitored by the visual inspection apparatus as shown in FIGS. 8 and 9. The visual inspection apparatus analyzes the video captured by the camera 5 to determine whether meander is present at the inlet 10, and when meander is detected, generates a signal related thereto such that measures may be taken in the winding apparatus to correct the meandering of the electrodes 1 and 3 and the separators 2 and 4.

In order to achieve this, the camera 5 may capture the inlet 10 and the surroundings thereof from the first side of the winding apparatus in the first direction.

Among the plurality of push members 50 installed on the rotating block 40, the push member 50 in the covering position is arranged between the inlet 10 and the camera 5 such that the inlet 10 is covered in the shooting range A of the camera 5.

That is, the push member 50 is necessary to support the separators 2 and 4 such that the separators 2 and 4 may be cut at an appropriate position. However, there may be a problem that the shooting operation of the camera 5 that seeks to obtain a video to determine whether meandering occurs is interfered with by the push member 50.

Considering such point, the capturing passage 52 is provided in the push member 50 according to the first embodiment. In the push member 50, the capturing passage 52 is arranged within the shooting range A of the camera 5 such that at least a portion of the inlet 10, that is, a portion that is the target of a video necessary for the determination work of the visual inspection apparatus, may be exposed toward the camera 5.

In the push member 50, since the capturing passage 52 occupies only a portion, the presence of the capturing passage 52 does not significantly affect the original function of the push member 50. That is, even when the capturing passage 52 is provided in the push member 50, the function of the push member 50 to support the separators 2 and 4 such that the separators 2 and 4 may be cut at an appropriate position is not degraded. Even when the function of the push member 50 is degraded due to the capturing passage 52, it is only at a very small level.

On the other hand, the effect of the capturing passage 52 provided in the push member 50 may be much greater than the level of degradation of the function of the push member 50 due to the capturing passage 52.

According to the first embodiment, since the capturing passage 52 is provided in the push member 50, the camera 5 may smoothly capture video of the target portion necessary for the determination work of the visual inspection apparatus.

Accordingly, the effect of allowing the meander determination of the visual inspection apparatus to be performed more quickly and accurately may be provided such that the capturing passage 52 provides a much greater effect than the level of functional degradation of the push member 50 due to the capturing passage 52.

### [OTHER EMBODIMENTS OF GUIDE MEMBERS]

The guide member described above is only an example of the present invention, and various embodiments of guide members other than the one described above may exist.

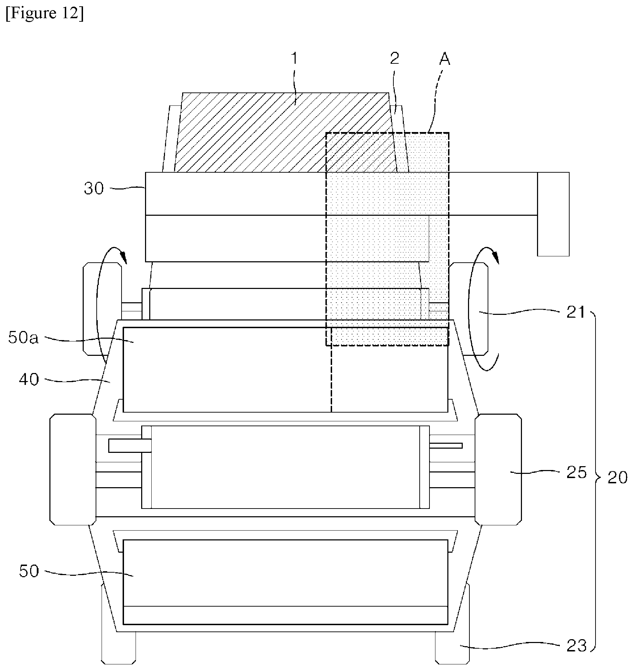

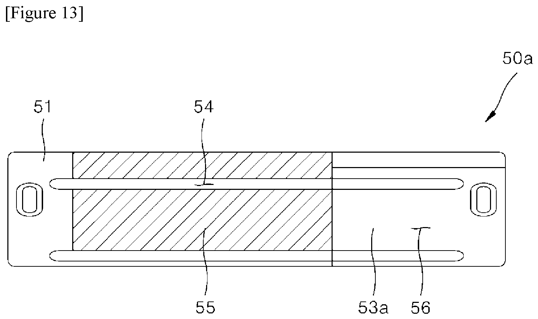

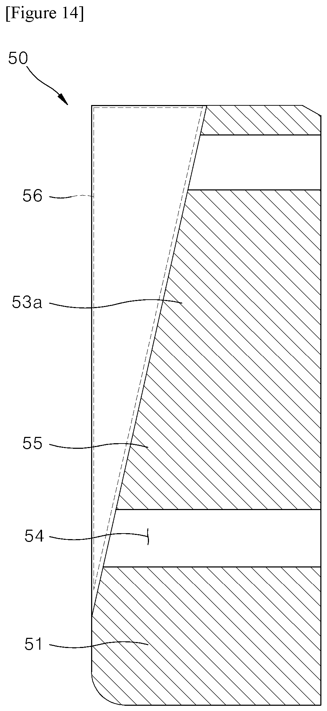

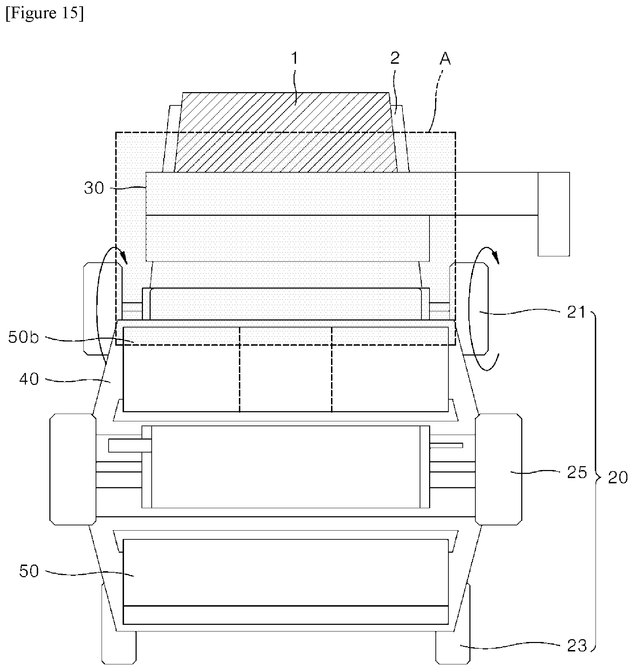

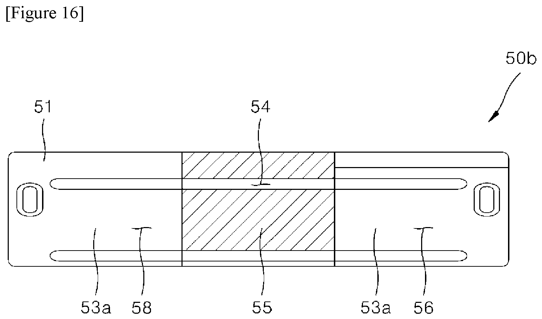

FIG. 12 is a front view illustrating a winding apparatus according to a second embodiment of the present invention, FIG. 13 is a plan view illustrating the push member separately from the winding apparatus shown in FIG. 12, FIG. 14 is a side cross-sectional view of the push member shown in FIG. 13, FIG. 15 is a front view illustrating a winding apparatus according to a third embodiment of the present invention, and FIG. 16 is a plan view illustrating the push member separately from the winding apparatus shown in FIG. 15.

Hereinafter, with reference to FIGS. 12 to 16, various other embodiments of the guide member will be described.

First, with reference to FIGS. 12 to 14, the push member 50a provided in the winding apparatus according to a second embodiment of the present invention may include a capturing passage 56. The main difference between the push member 50a according to the second embodiment and the guide member (30; see FIG. 1) exemplified in the above-described embodiment lies in the capturing passage 56.

According to the second embodiment, the capturing passage 56 may be arranged at a position biased toward the first side or the second side in the third direction of the push members 50a.

When the shooting range A of the camera 5 is biased toward the first side or the second side of the winding apparatus in the third direction, the capturing passage 56 may be arranged at a position that is biased toward the first side or the second side of the push members 50a in the third direction, thereby forming a passage in the push members 50a to enable the camera 5 to smoothly capture the video of the target portion necessary for the determination work of the visual inspection apparatus.

In order to achieve this, the slope section 53a may be provided only in a portion of the push members 50a along the third direction rather than the entire area of the push members 50a along the third direction. For example, the slope section 53a may be provided at a position that is biased toward the first side or the second side of the push members 50a in the third direction.

The push member 50a described above may provide an effect of improving the function of the push member 50a that supports the separators 2 and 4 such that the video required for the meander determination of the visual inspection apparatus may be effectively acquired while being able to cut the separators 2 and at an appropriate position by providing the capturing passage 56 only in a portion of the area required for the camera 5 to capture the video of the target portion necessary for the determination work of the visual inspection apparatus.

In addition, referring to FIGS. 15 and 16, the push member 50b provided in the winding apparatus according to a third embodiment of the present invention may include a plurality of capturing passages 56 and 58. The push member 50b according to the third embodiment may include a capturing passage 56 biased toward the first side of the push members 50a in the third direction and a capturing passage 58 biased toward the second side of the push members 50a in the third direction.

The push member 50b according to the third embodiment as described above including a plurality of capturing passages 56 and 58 provides a plurality of passages that enable the camera 5 to captures video at a plurality of points, unlike the push member (50a; see FIG. 13) exemplified in the second embodiment of the present invention such that the videos necessary for the determination of the visual inspection apparatus is acquired at a plurality of points, thereby contributing to more accurate meander determination of the visual inspection apparatus.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

### <DESCRIPTION OF REFERENCE NUMERALS>

1: first electrode
2: first separator
3: second electrode
4: second separator
5: camera
10: inlet
20: rewinder
21: first rewinder
23: second rewinder
25: third rewinder
30: guide member
40: rotating block
50: push member
51: protruding plate
52: capturing passage
53: slope section
54: insertion groove
55: contacting portion
60: cutter
70: tape applicator

## Claims

1. A winding apparatus for manufacturing an electrode assembly by winding an electrode and a separator supplied in a second direction orthogonal to a first direction, comprising:
an inlet where the electrode together with the separator is inserted into in a manner that the electrode is disposed on a first side of the separator in the first direction;
a rewinder for winding the electrode and the separator supplied through the inlet in a first position; and
a push member disposed between the inlet and a camera capturing the inlet from a first side of the inlet in the first direction,
wherein the push member comprises a protruding plate disposed between the camera and the inlet, and a capturing passage exposing a portion of the push member such that at least a portion of the inlet is exposed toward the camera.

2. The winding apparatus of claim 1, further comprising a rotating block changing a position of the rewinder from the first position to a second position, or from the second position to a third position, or from the third position to the first position along a rotational orbit centered on an axis in a third direction orthogonal to the first direction and the second direction, and
comprising a plurality of rewinders and a plurality of push members arranged along the rotational orbit of the rotating block,
wherein the plurality of rewinders and the plurality of push members are arranged alternately along the rotational orbit of the rotating block.

3. The winding apparatus of claim 2, wherein the plurality of rewinders are disposed in the first position, the second position and the third position, respectively,
the plurality of push members are arranged between the third position and the first position, between the first position and the second position, and between the second position and the third position, respectively, and
the protruding plate protrudes in a centrifugal direction from the rotating block.

4. The winding apparatus of claim 2, wherein the protruding plate protrudes from the rotating block in a centrifugal direction, and
the capturing passage is disposed outer than the protruding plate in diametric direction of the rotating block.

5. The winding apparatus of claim 4, wherein the camera faces the inlet in a direction between the first direction and the second direction, and
one side of the protruding plate of the push member disposed between the third position and the first position facing a centrifugal direction is inclined in a direction between the first direction and the second direction.

6. The winding apparatus of claim 5, wherein one side of the protruding plate of the push member disposed between the third position and the first position facing the centrifugal direction forms an inclined surface that tilts toward the centripetal direction as it moves toward the first position.

7. The winding apparatus of claim 1, wherein the electrode is arranged inner than the separator on a plane perpendicular to the first direction, and
the capturing passage is arranged at a position such that at least a portion of a boundary line between the electrode and the separator is exposed toward the camera.

8. The winding apparatus of claim 1, wherein the rewinder winds the electrode and the separator together in the first position and moves to the second position with the separator connected thereto, and
the push member is arranged between the first position and the second position such that at least a portion of the protruding plate applies pressure to the separator in the second position in a centrifugal direction.

9. The winding apparatus of claim 1, wherein the electrode is arranged inner than the separator on a plane perpendicular to the first direction, and
the capturing passage is arranged at a position such that at least a portion of a boundary line between the electrode and the separator is exposed toward the camera.

10. The winding apparatus of claim 9, wherein the capturing passage is arranged at a position such that a portion of a boundary line between the electrode and the separator along a third direction perpendicular to the second direction is exposed toward the camera.

11. The winding apparatus of claim 10, wherein the capturing passage is arranged at a position such that a boundary line between the electrode and the separator along the second direction and the boundary line between the electrode and the separator along the third direction are exposed toward the camera.

12. The winding apparatus of claim 10, wherein the camera is arranged to capture an edge of the electrode where the boundary line between the electrode and the separator along the second direction meets the boundary line between the electrode and the separator along the third direction, and
the capturing passage exposed the edge of the electrode toward the camera.
